# EUROPÄISCHE PATENTSCHRIFT

(11) **EP 2 877 871 B1**
(45) Veröffentlichungstag und Bekanntmachung des Hinweises auf die Patenterteilung: **05.12.2018**
(21) Anmeldenummer: 13740002.4
(22) Anmeldetag: 23.07.2013
(51) Int. Cl.: G01S 7/521, B60R 19/48, G01S 15/93

(54) **ULTRASCHALLSENSORANORDNUNG MIT EINER ZERSTÖRUNGSFREIEN REPARATURLÖSUNG, KRAFTFAHRZEUG UND ENTSPRECHENDES VERFAHREN**
ULTRASONIC SENSOR ARRANGEMENT COMPRISING A NON-DESTRUCTIVE REPARATION SOLUTION, MOTOR VEHICLE AND CORRESPONDING METHOD
ENSEMBLE CAPTEUR À ULTRASONS PRÉSENTANT UNE SOLUTION DE RÉPARATION NON DESTRUCTIVE, VÉHICULE À MOTEUR ET PROCÉDÉ CORRESPONDANT

(30) Priorität: 24.07.2012 DE 102012106695
(43) Veröffentlichungstag der Anmeldung: 03.06.2015
(73) Patentinhaber: Volkswagen Aktiengesellschaft, 38440 Wolfsburg (DE)
(72) Erfinder: WEHLING, Hans-Wilhelm, 74074 Heilbronn (DE); MAX, Stephan, 38518 Gifhorn (DE)
(74) Vertreter: Hofstetter, Schurack & Partner
(86) Internationale Anmeldenummer: PCT/EP2013/065510
(87) Internationale Veröffentlichungsnummer: WO 2014/016295

(56) Entgegenhaltungen:
- DE-A1-102008 016 558
- DE-A1-102008 017 067
- DE-A1-102010 049 818
- DE-A1-102010 049 820

## Beschreibung

Die Erfindung betrifft eine Ultraschallsensoranordnung für ein Kraftfahrzeug, mit einem Verkleidungsteil und einem Ultraschallsensor, welcher eine Membran zum Aussenden und/oder Empfangen von Ultraschallsignalen aufweist, mit einer Halteeinrichtung, mittels welcher der Ultraschallsensor an einer Rückseite des Verkleidungsteils befestigt ist, wobei die Halteeinrichtung über Verbindungsmittel an der Rückseite des Verkleidungsteils fixiert ist und der Ultraschallsensor zerstörungsfrei reversibel lösbar mit der Halteeinrichtung verbunden ist, und mit einem Koppelelement, über welches eine dem Verkleidungsteil zugewandte Fronseite der Membran mit der Rückseite des Verkleidungsteils schwingungstechnisch gekoppelt ist, so dass der Ultraschallsensor zum Aussenden und/oder Empfangen der Ultraschallsignale durch das Koppelelement und das Verkleidungsteil hindurch ausgebildet ist. Die Erfindung betrifft außerdem ein Kraftfahrzeug mit einer solchen Anordnung sowie auch ein Verfahren zum Herstellen einer derartigen Anordnung.

Ultraschallsensoren sind bereits Stand der Technik und können in bekannter Weise im Frontbereich und im Heckbereich des Kraftfahrzeugs verbaut werden, nämlich beispielsweise an den Stoßfängern. Die Ultraschallsensoren sind Fahrerassistenzeinrichtungen zugeordnet und liefern Informationen über die Fahrzeugumgebung, und genauer gesagt über die Abstände zwischen dem Fahrzeug einerseits und den in seiner Umgebung befindlichen Hindernissen andererseits. Fahrerassistenzeinrichtungen können dabei beispielsweise Parkassistenzsysteme, Systeme zur Totwinkelüberwachung, Systeme zur Abstandshaltung, Spurüberwachungssysteme, Bremsassistenzsysteme und dergleichen sein.

Es ist bereits bekannt, dass derartige Ultraschallsensoren in Stoßfängern unverdeckt verbaut angeordnet sind. Dies bedeutet, dass sie in durchgängigen Aussparungen bzw. Durchgangsöffnungen in dem Stoßfänger angeordnet sind und außenseitig sichtbar sind. Hier erstreckt sich die topfförmige Membran des Ultraschallsensors - der so genannte Aluminiumtopf - durch die Durchgangsöffnung des Stoßfängers hindurch, so dass eine Frontseite bzw. Frontfläche der Membran mit der äußeren Oberfläche des Stoßfängers bündig abschließt.

Das Interesse gilt vorliegend jedoch einer verdeckten Anordnung eines Ultraschallsensors, wie sie beispielsweise aus dem Dokument DE 42 38 924 A1 oder aber aus dem Dokument DE 10 2008 018 110 A1 bekannt ist. Bei einer solchen versteckten Anordnung ist der Ultraschallsensor hinter dem Stoßfänger verdeckt angeordnet, so dass die Frontfläche der Membran an einer Rückseite des Stoßfängers anliegt und die Ultraschallwellen somit durch das Material des Stoßfängers hindurch ausgesendet und empfangen werden. Hier muss ein geeigneter Halter eingesetzt werden, um die Membran bzw. den gesamten Ultraschallsensor einschließlich der Membran an der Rückseite des Stoßfängers befestigen zu können. Es ist diesbezüglich bereits Stand der Technik, dass eine solche Halteeinrichtung über einen Klebstoff mit dem Stoßfänger fest verbunden wird, während der Ultraschallsensor selbst reversibel lösbar (und zerstörungsfrei lösbar) mit der Halteeinrichtung verbunden werden kann. Diese Verbindung ist in der Regel so konzipiert, dass zwischen der Frontseite der Membran einerseits und der Rückseite des Stoßfängers andererseits ein geringer Luftspalt ausgebildet ist, welcher dann mit einem geeigneten Klebstoff gefüllt wird, welcher die Übertragung der mechanischen Schwingung auf den Stoßfänger ermöglicht. Dieser Klebestoff verbindet also zusätzlich die Membran des Ultraschallsensors mit dem Stoßfänger und dient also als Koppelelement zwischen der Membran und dem Stoßfänger. Üblicherweise wird an dieser Stelle der gleiche Klebstoff wie zwischen der Halteeinrichtung und dem Stoßfänger verwendet. Eine solche Vorgehensweise hat jedoch den Nachteil, dass im Falle eines Defekts des Ultraschallsensors die Klebeverbindung zwischen der Membran und dem Stoßfänger nicht zerstörungsfrei gelöst werden kann. Bei einer Demontage des Ultraschallsensors bzw. beim Entnehmen des Ultraschallsensors von der Halteeinrichtung wird also auch in der Regel die Rückseite des Stoßfängers beschädigt, so dass bei einem defekten Ultraschallsensor auch ein neuer Stoßfänger eingebaut werden muss, was zu erheblich gesteigerten Reparaturkosten führt.

Aus der DE 10 2010 0498 818 A1 ist eine Anordnung mit einem Außenverkleidungselement und einer Haltevorrichtung bekannt. Ein Ultraschallsensor wird dort verdeckt hinter dem Außenverkleidungselement verbaut, wobei zwischen einer Frontseite einer Membran des Ultraschallsensors und einer Rückseite des Ultraschallsensors eine Ankoppelschicht aus Gel ausgebildet sein kann. Aus der DE 10 2008 017 067 A1 ist ein elektroakustischer Wandler bekannt, bei welchem zwischen einer Frontseite einer Membran und einer Rückseite eines Verkleidungsteils eine Koppelschicht aus Silikongel ausgebildet sein kann.

Es ist Aufgabe der Erfindung, einen Weg aufzuzeigen, wie bei einer Ultraschallsensoranordnung der eingangs genannten Gattung eine Zerstörung des Verkleidungsteils im Falle eines defekten Ultraschallsensors bzw. bei Demontage des Ultraschallsensors verhindert werden kann.

Diese Aufgabe wird erfindungsgemäß durch eine Ultraschallsensoranordnung, durch ein Kraftfahrzeug, wie auch durch ein Verfahren mit den Merkmalen gemäß den jeweiligen unabhängigen Patentansprüchen gelöst. Vorteilhafte Ausführungen der Erfindung sind Gegenstand der abhängigen Patentansprüche.

Eine erfindungsgemäße Ultraschallsensoranordnung für ein Kraftfahrzeug umfasst ein Verkleidungsteil - beispielsweise einen Stoßfänger - sowie einen Ultraschallsensor, welcher eine Membran zum Aussenden und/oder Empfangen von Ultraschallsignalen bzw. Ultraschallwellen aufweist. Die Anordnung umfasst außerdem eine Halteeinrichtung, mittels welcher der Ultraschallsensor an einer Rückseite des Verkleidungsteils befestigt ist, wobei die Halteeinrichtung über Verbindungsmittel an der Rückseite des Verkleidungsteils fixiert ist und der Ultraschallsensor zerstörungsfrei reversibel lösbar mit der Halteeinrichtung verbunden ist. Über ein Koppelelement ist eine dem Verkleidungsteil zugewandte Frontseite der Membran mit der Rückseite des Verkleidungsteils schwingungstechnisch gekoppelt, so dass der Ultraschallsensor zum Aussenden und/oder Empfangen der Ultraschallsignale durch das Koppelelement und das Verkleidungsteil hindurch ausgebildet ist. Durch das Koppelelement ist eine Verbindung zwischen der Membran und dem Verkleidungsteil gebildet, welche gegenüber den Verbindungsmitteln eine geringere Haftfestigkeit aufweist.

Dies bedeutet, dass die Membran weniger fest als die Halteeinrichtung mit der Rückseite des Verkleidungsteils verbunden ist. Somit wird in vorteilhafter Weise erreicht, dass im Falle eines Defekts des Ultraschallsensors selbiger Sensor demontiert bzw. von der Halteeinrichtung entnommen werden kann, ohne dass das Verkleidungsteil beschädigt wird. Beim Entnehmen des Ultraschallsensors verbleibt also lediglich die Halteeinrichtung an der Rückseite des Verkleidungsteils, so dass lediglich der Ultraschallsensor von der gesamten Anordnung abgenommen und ein neuer Ultraschallsensor anstelle des alten eingesetzt werden kann.

Es wird also eine Verwendung von zwei verschiedenen Verbindungsarten vorgeschlagen, welche unterschiedliche Haftfestigkeit aufweisen. Hierbei ist die Haftfestigkeit des Koppelelements zwischen Membran und Verkleidungsteil geringer als die Haftfestigkeit der Verbindungsmittel zwischen Halteeinrichtung und Verkleidungsteil. Dies kann auch bedeuten, dass das Koppelelement keine stoffschlüssige Verbindung zwischen der Membran und dem Verkleidungsteil bildet, sondern als separates Element lösbar in dem Zwischenbereich zwischen der Membran und dem Verkleidungsteil liegt und einerseits an der Membran sowie andererseits an der Rückseite des Verkleidungsteils anliegt. In diesem Falle ist die Haftfestigkeit dieser Verbindung gleich Null.

Erfindungsgemäß ist vorgesehen, dass das Koppelelement Gel umfasst und als ein mit Gel gefüllter Beutel ausgebildet ist. Hierbei wird also ein mit Gel gefüllter Beutel verwendet, welcher zwischen der Frontseite der Membran und dem Verkleidungsteil angeordnet ist. Dieser Beutel kann über eine Vorspannung eingepresst werden, um so einen vollflächigen bzw. durchgängigen Kontakt zu gewährleisten und somit Lufteinschlüsse zwischen der Membran und dem Verkleidungsteil zu vermeiden. Dieser mit Gel gefüllte Beutel stellt also ein Koppelelement dar, welches zerstörungsfrei lösbar bzw. abnehmbar zwischen der Membran und dem Verkleidungsteil angeordnet ist. Diese Ausführungsform macht sich die Tatsache zunutze, dass ein Gel - wie beispielsweise ein flüssiges Silikon - nicht bei tiefen Temperaturen verhärtet und außerdem unter Druck die Kräfte 1:1 übertragen kann. Somit ergibt sich einerseits eine zuverlässige Schallübertragung auf das Verkleidungsteil; andererseits ist somit auch eine besonders einfache Demontage des Ultraschallsensors und ein einfacher Austausch des Sensors möglich. Vorzugsweise ist dabei vorgesehen, dass der Beutel unter Druck bzw. unter einer Kraft zwischen der Membran und dem Verkleidungsteil gehalten wird. Dies kann auch dadurch ermöglicht werden, dass ein entsprechender Werkstoff sowie eine entsprechende Materialdicke des Beutels alleine gewählt werden. Dieser Beutel wird bevorzugt so ausgelegt, dass er zwischen dem Verkleidungsteil und der Membran ständig bzw. kontinuierlich unter Druck steht, wobei der Innendruck sowie auch der Außendruck über den geforderten Temperaturbereich konstant bleiben. Es kann auch vorgesehen sein, dass das Material des Beutels selbst den Druck im eingebauten Zustand erzeugt. Bei einem Temperaturanstieg dehnt sich das Gel, und der Beutel wird größer, während der Druck konstant gehalten werden kann. Dies soll auch bei negativen Temperaturen gelten. Dabei wird vorzugsweise ausreichend Raum zwischen der Membran und dem Verkleidungsteil bereitgestellt, damit sich der Gel-Beutel entsprechend ausdehnen kann. Der entscheidende Vorteil dieser Ausführungsform besteht darin, dass auch die bereits bestehenden, herkömmlichen Ultraschallsensoren verwendet werden können, weil mit dem Gel-Beutel alle Toleranzen ausgeglichen werden können und außerdem die Alterung einer Klebstelle nicht gegeben ist. Das Material des Beutels alleine kann beispielsweise ein silikonartiges Material sein, also weich und elastisch über den geforderten Temperaturbereich. Ein solcher Beutel entspricht also grundsätzlich einem Luftballon, welcher - wenn zusammengedrücktseitlich größer wird. Der Beutel hat außerdem vorzugsweise eine besonders dünne Wanddicke.

Vorzugsweise umfassen die Verbindungsmittel zwischen der Halteeinrichtung und dem Verkleidungsteil einen Klebstoff oder sind durch einen solchen Klebstoff gebildet. Somit kann eine besonders feste, zuverlässige und schnell zu realisierende Verbindung zwischen der Halteeinrichtung und dem Verkleidungsteil und somit eine wirkungsvolle Befestigung des Ultraschallsensors an dem Verkleidungsteil ermöglicht werden. Dieser Klebstoff entspricht also dem Klebstoff, welcher im Stand der Technik zur Verklebung sowohl der Membran als auch der Halteeinrichtung mit dem Verkleidungsteil eingesetzt wird.

Hinsichtlich des Koppelelements zwischen der Membran und dem Verkleidungsteil können nun verschiedenste Ausführungsformen vorgesehen sein:
In einer Ausführungsform ist vorgesehen, dass durch das Koppelelement eine stoffschlüssige Verbindung zwischen der Membran und dem Verkleidungsteil gebildet ist. Eine solche stoffschlüssige Verbindung ermöglicht eine zuverlässige Übertragung der mechanischen Schwingung von der Membran auf das Verkleidungsteil, so dass eine reflexionsfreie Schallübertragung bzw. Schallausbreitung durch das Verkleidungsteil hindurch gewährleistet ist.

Hierbei kann vorgesehen sein, dass das Koppelelement ein Klebstoff ist. Dieser Klebestoff weist also eine geringere Haftfestigkeit auf als der zwischen der Halteeinrichtung und dem Verkleidungsteil eingesetzte Klebstoff und kann somit mit geringem Aufwand wieder aufgelöst werden. Die Halteeinrichtung kann so ausgeführt sein, dass der Ultraschallsensor über diese Halteeinrichtung zunächst an dem Verkleidungsteil angebracht und in einer konstanten Position gehalten werden kann.

Somit entsteht zwischen dem Ultraschallsensor und dem Verkleidungsteil ein Spalt, welcher mit dem Klebstoff mit einer geringeren Haltekraft gefüllt werden kann. Dieser Klebestoff gewährleistet nun die Ankopplung der Membran an das Verkleidungsteil und gleicht somit auch mögliche Toleranzen aus. Lediglich beispielhaft sei an dieser Stelle der Klebstoff "ONS-Mix® 2 Komponenten Kunststoffreparatur-Klebstoff" der Firma SONS genannt, welcher als Koppelelement zwischen der Membran und dem Verkleidungsteil verwendet werden kann. Im Falle eines defekten Ultraschallsensors kann nun die Verbindung zwischen der Halteeinrichtung und dem Ultraschallsensor - gegebenenfalls mit Hilfe eines geeigneten Hilfswerkzeugs - gelöst werden, so dass der Ultraschallsensor lediglich noch von dem Klebstoff mit einer geringeren Kraft gehalten wird. Beispielsweise durch Verdrehen und/oder Verkippen des Ultraschallsensors kann nun von Hand oder aber mit einem anderen Hilfswerkzeug eine Kraft auf den Ultraschallsensor und somit eine Scherkraft auf die Klebeschicht aufgebracht werden, welche die maximalen Scherkräfte des Klebstoffs übersteigt, so dass sich die Klebestelle löst und der Ultraschallsensor zur Reparatur bzw. zum Austausch entnommen werden kann. Das Verkleidungsteil - insbesondere der Stoßfänger - bleibt somit unbeschädigt. Der Einsatz eines Klebstoffs als Koppelelement hat also insgesamt den Vorteil, dass diese Verbindung zwischen der Membran und dem Verkleidungsteil ohne viel Aufwand wieder gelöst werden kann und der Ultraschallsensor ohne Zerstörung des Verkleidungsteils ausgetauscht werden kann.

Erfindungsgemäß ist das Koppelelement zerstörungsfrei abnehmbar bzw. lösbar zwischen der Frontseite der Membran und dem Verkleidungsteil angeordnet ist. Eine solche nicht-stoffschlüssige Verbindung hat den Vorteil, dass das Koppelelement auch nach dem Austauschen des Ultraschallsensors wieder eingesetzt werden kann, ohne dass ein neues Koppelelement bereitgestellt werden muss. Es reicht lediglich, dass der alte Ultraschallsensor von der Halteeinrichtung entnommen und sofort ein neuer Ultraschallsensor bzw. der alte reparierte Ultraschallsensor befestigt wird. Dies hat auch den Vorteil, dass die Kopplung zwischen der Membran und dem Verkleidungsteil sofort gegeben ist, ohne dass man eine Aushärtezeit - wie beim Klebstoff - abwarten muss.

Es erweist sich als besonders vorteilhaft, wenn das Koppelelement zwischen der Frontseite der Membran und dem Verkleidungsteil kraftschlüssig unter einem Druck eingeklemmt ist. Dies bedeutet, dass auf das Koppelelement stets bzw. kontinuierlich eine Kraft von der Membran in Richtung zum Verkleidungsteil wirkt. Hierdurch ist stets gewährleistet, dass die Ultraschallwellen wirkungsvoll auf das Verkleidungsteil übertragen und somit ausgesendet werden können. Mit anderen Worten ist somit stets eine zuverlässige schwingungstechnische Kopplung zwischen der Membran und dem Verkleidungsteil gegeben.

Vorzugsweise ist das Koppelelement ein elastisches Element. Somit wirkt stets eine Federkraft zwischen der Membran und dem Verkleidungsteil, so dass eine vollflächige Anlage des Koppelelements einerseits an der Rückseite des Verkleidungsteils und andererseits an der Frontseite der Membran gewährleistet und folglich eine gute Schallübertragung gegeben ist.

Alternativ kann auch vorgesehen sein, dass der Zwischenraum zwischen der Membran einerseits und dem Verkleidungsteil andererseits abgedichtet ausgebildet wird. Dieser Zwischenraum kann dann mit einem entsprechenden Gel gefüllt und versiegelt werden. Optional kann hier auch ein Gel eingesetzt werden, welches mit Hilfe von Additiven leicht aushärtet und so direkt in dem Zwischenraum verbleibt. Dies bedeutet, dass bei der Montage das Gel in den Zwischenraum eingegeben wird und anschließend die genannten Additive hinzugefügt werden, so dass das Gel aushärtet und in seiner Position verbleibt.

Ein erfindungsgemäßes Kraftfahrzeug umfasst eine erfindungsgemäße Ultraschallsensoranordnung.

Die Erfindung betrifft auch ein Verfahren zum Herstellen einer Ultraschallsensoranordnung für ein Kraftfahrzeug durch Bereitstellen eines Verkleidungsteils sowie eines Ultraschallsensors mit einer Membran zum Aussenden und/oder Empfangen von Ultraschallsignalen, sowie Bereitstellen einer Halteeinrichtung, mittels welcher der Ultraschallsensor an einer Rückseite des Verkleidungsteils befestigt wird, wobei die Halteeinrichtung über Verbindungsmittel an der Rückseite des Verkleidungsteils fixiert wird und der Ultraschallsensor reversibel lösbar mit der Halteeinrichtung verbunden wird, wie auch Bereitstellen eines Koppelelements, über welches eine dem Verkleidungsteil zugewandte Frontseite der Membran mit der Rückseite des Verkleidungsteils schwingungstechnisch gekoppelt wird, so dass der Ultraschallsensor die Ultraschallsignale durch das Koppelelement und das Verkleidungsteil hindurch aussendet und/oder empfängt. Durch das Koppelelement wird eine Verbindung zwischen der Membran und dem Verkleidungsteil geschaffen, welche gegenüber den Verbindungsmitteln eine geringere Haftfestigkeit bzw. Haltekraft aufweist.

Die mit Bezug auf die erfindungsgemäße Anordnung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer Darstellung eine Explosionsansicht einer Ultraschallsensorvorrichtung einer Anordnung gemäß einer Ausführungsform der Erfindung; und
- Fig. 2: in schematischer Darstellung eine Schnittansicht durch eine Anordnung gemäß einer Ausführungsform der Erfindung.

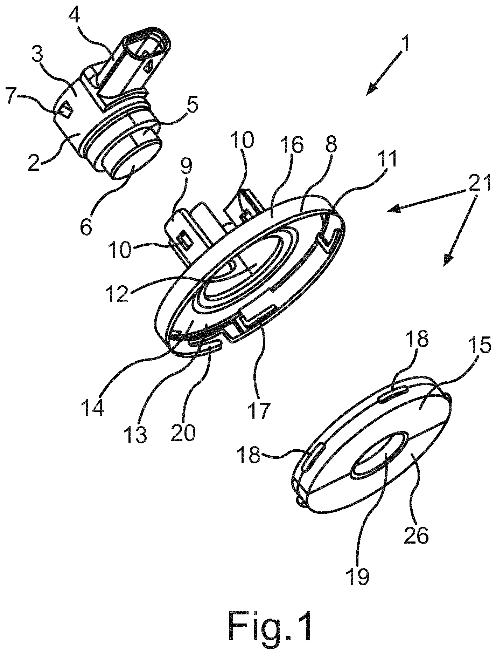

In Fig. 1 ist in schematischer Darstellung eine Ultraschallsensorvorrichtung 1 für eine Anordnung gemäß einer Ausführungsform der Erfindung näher gezeigt. Die Ultraschallsensorvorrichtung 1 umfasst einen Ultraschallsensor 2, welcher ein Sensorgehäuse 3 mit einem Stecker 4 aufweist, welcher zum Verbinden des Ultraschallsensors 2 mit einer elektronischen Steuereinrichtung eines Kraftfahrzeugs dient. Aus dem zylindrischen Sensorgehäuse 3 ragt eine Membran 5 heraus, welche zum Aussenden und Empfangen von Ultraschallsignalen bzw. Ultraschallwellen ausgebildet ist. Die Membran 5 ist in Form eines Topfes ausgebildet und beispielsweise aus Aluminium. Sie hat eine Frontseite 6, durch welche die Ultraschallwellen ausgesendet werden. Die mechanische Anregung der Frontseite 6 kann beispielsweise mit Hilfe eines piezoelektrischen Elements erfolgen, welches im Inneren der Membran 5 auf einem Boden platziert ist, welcher durch die Frontseite 6 gebildet ist.

An dem Sensorgehäuse 3 sind Rastelemente 7 ausgebildet, über welche der Ultraschallsensor 2 an einem Aufnahmeteil 8 zerstörungsfrei reversibel lösbar befestigt werden kann. Das Aufnahmeteil 8 hat einen Aufnahmeschacht 9, in welchem korrespondierende Rastöffnungen bzw. Rastlaschen 10 ausgebildet sind, in welche die Rastelemente 7 des Ultraschallsensors 2 verrasten können. Das Aufnahmeteil 8 hat außerdem einen Untersatz 11, welcher konzentrisch zum zylinderförmigen Aufnahmeschacht 9 angeordnet ist und ebenfalls zylindrisch ausgebildet ist sowie einen größeren Durchmesser als der Aufnahmeschacht 9 aufweist. Das Aufnahmeteil 8 weist eine zentrale Durchgangsöffnung 12 auf, durch welche sich die Membran 5 im verbauten Zustand hindurch erstreckt, um an einem Verkleidungsteil des Kraftfahrzeugs anliegen zu können.

Auf seiner vom Ultraschallsensor 2 abgewandten Frontseite bzw. Vorderseite weist der Untersatz 11 eine Aufnahme 13 mit einem Boden 14 auf, in welche ein aus Keramik gebildetes Versteifungselement 15 eingesetzt wird. Die Aufnahme 13 ist seitlich durch einen umlaufenden Steg 16 begrenzt, an dessen Innenumfang 20 Raststrukturen 17 angeformt sind, welche zur Verrastung mit korrespondierenden Rastelementen 18 des Versteifungselements 15 ausgebildet sind.

Auch das Versteifungselement 15 hat eine Durchgangsöffnung 19, durch welche sich die Membran 5 hindurch erstreckt.

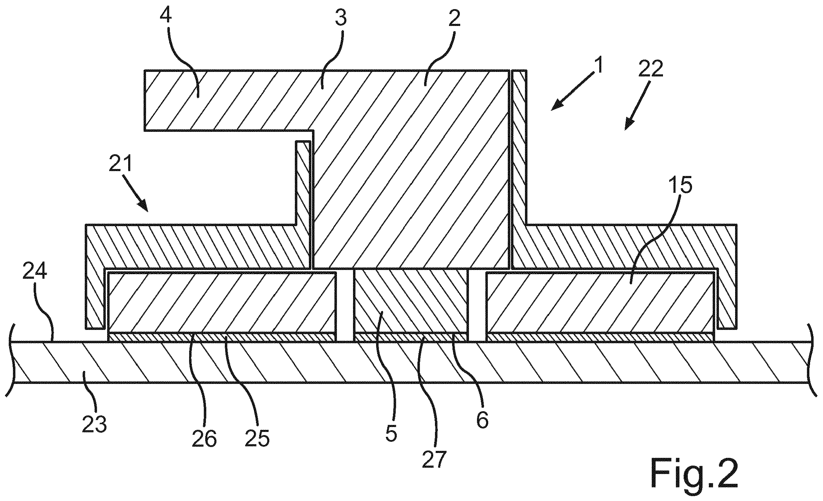

Das Aufnahmeteil 8 einerseits und das Versteifungselement 15 andererseits bilden insgesamt eine Halteeinrichtung 21, mittels welcher der Ultraschallsensor 2 an einer Rückseite eines Verkleidungsteils des Kraftfahrzeugs verdeckt befestigt werden kann. Eine Ultraschallsensoranordnung 22 gemäß einer Ausführungsform der Erfindung ist dabei in einer Schnittdarstellung in Fig. 2 gezeigt. Diese Anordnung 22 weist einerseits die Ultraschallsensorvorrichtung 1 gemäß Fig. 1 sowie andererseits ein Verkleidungsteil 23 auf, welches im Ausführungsbeispiel als Stoßfänger ausgebildet ist. Die Halteeinrichtung 21 ist zusammen mit dem Ultraschallsensor 2 an einer Rückseite 24 des Verkleidungsteils 23 angeordnet, welche dem Innenraum des Fahrzeugs zugewandt und somit von außen nicht sichtbar ist. Insgesamt ist somit die gesamte Ultraschallsensorvorrichtung 1 von außen nicht sichtbar und somit hinter dem Verkleidungsteil 23 versteckt angeordnet.

Wie aus Fig. 2 zu erkennen ist, ist das keramische Versteifungselement 15 um die Membran 5 herum angeordnet und umgreift somit die Membran 5 außenumfänglich. Zwischen der Membran 5 und dem Versteifungselement 15 kann noch gegebenenfalls ein Entkopplungsring angeordnet sein, welcher in den Zeichnungen nicht dargestellt ist.

Wie bereits ausgeführt, ist der Ultraschallsensor 2 mit der Halteeinrichtung 21 zerstörungsfrei und reversibel lösbar verbunden, so dass diese Verbindung zwischen dem Ultraschallsensor 2 und der Halteeinrichtung 21 jederzeit gelöst und wieder hergestellt werden kann. Lediglich exemplarisch ist diese Verbindung durch Rastmittel realisiert, wie oben bereits erwähnt.

Die Halteeinrichtung 21 wird über Verbindungsmittel 25 mit der Rückseite 24 des Verkleidungsteils 23 verbunden. Zur Fixierung der Halteeinrichtung 21 an der Rückseite 24 sind diese Verbindungsmittel 25 im Ausführungsbeispiel durch einen festen Klebstoff gebildet, über welchen eine Frontseite 26 des Versteifungselements 15 mit der Rückseite 24 des Verkleidungsteils 23 verklebt ist. Dieser Klebstoff weist eine große Haltekraft auf und kann gegebenenfalls nur mit einem speziellen Werkzeug gelöst werden.

Demgegenüber ist die Frontseite 6 der Membran 5 über ein Koppelelement 27 mit der Rückseite 24 des Verkleidungsteils 23 gekoppelt, wobei dieses Kopplungselement 27 eine deutlich geringere Haltekraft als die Verbindungsmittel 25 aufweist. Diese Haltekraft kann auch Null betragen, nämlich dann, wenn das Kopplungselement 27 als separates Einlageteil ausgebildet wird.

Hinsichtlich der Ausgestaltung dieses Koppelelements 27 können nun verschiedene Ausführungsformen vorgesehen sein: Zum einen kann das Koppelelement 27 ebenfalls durch einen Klebstoff gebildet sein, welcher jedoch eine geringere Haltekraft bzw. geringere Haftfestigkeit als die Verbindungsmittel 25 aufweist. Somit ist durch dieses Koppelelement 27 auch eine stoffschlüssige Verbindung zwischen der Membran 5 und der Rückseite 24 geschaffen, über welche die mechanische Schwingung der Membran 5 zuverlässig auf das Verkleidungsteil 23 übertragen werden kann.

Erfindungsgemäß ist dieses Koppelelement 27 jedoch als ein separates Bauteil ausgebildet sein, welches zerstörungsfrei abnehmbar zwischen der Frontseite 6 und der Rückseite 24 angeordnet ist. Ein solches Koppelelement 27 wird in Form eines mit Gel gefüllten Beutels bereitgestellt. Dieser Beutel kann zwischen der Frontseite 6 und der Rückseite 24 unter Druck eingeklemmt sein. Auch mit einem solchen Gel-Beutel kann eine gute Schallübertragung gewährleistet werden und somit eine ordnungsgemäße Funktionsweise des Ultraschallsensors 2.

Noch alternativ kann vorgesehen sein, dass der Zwischenraum zwischen der Membran 5 und der Rückseite 24 des Verkleidungsteils 23 mit Hilfe eines geeigneten Dichtungselements bzw. Entkopplungsrings fluidisch abgedichtet wird und in diesen Zwischenraum ein Gel eingefügt wird. Gegebenenfalls kann hier noch ein geeignetes Additiv hinzugefügt werden, mit welchem das Gel aushärtet.

Alle genannten Lösungen haben den Vorteil, dass der Ultraschallsensor 2 ausgetauscht werden kann, ohne dass das Verkleidungsteil 23 zerstört wird. Zum Austauschen des Ultraschallsensors 2 muss lediglich die Verbindung zwischen dem Sensor 2 und der Halteeinrichtung 21 gelöst werden, und dann muss der Ultraschallsensor 2 von der Halteeinrichtung 21 entnommen werden. Dabei wird gegebenenfalls die Klebstoffverbindung zwischen der Membran 5 und dem Verkleidungsteil 23 gelöst.

## Patentansprüche

1. Ultraschallsensoranordnung (22) für ein Kraftfahrzeug, mit einem Verkleidungsteil (23) und einem Ultraschallsensor (2), welcher eine Membran (5) zum Aussenden und/oder Empfangen von Ultraschallsignalen aufweist, mit einer Halteeinrichtung (21), mittels welcher der Ultraschallsensor (2) an einer Rückseite (24) des Verkleidungsteils (23) befestigt ist, wobei die Halteeinrichtung (21) über Verbindungsmittel (25) an der Rückseite (24) des Verkleidungsteils (23) fixiert ist und der Ultraschallsensor (2) reversibel lösbar mit der Halteeinrichtung (21) verbunden ist, und mit einem Koppelelement (27), über welches eine dem Verkleidungsteil (23) zugewandte Frontseite (6) der Membran (5) mit der Rückseite (24) des Verkleidungsteils (23) schwingungstechnisch gekoppelt ist, sodass der Ultraschallsensor (2) zum Aussenden und/oder Empfangen der Ultraschallsignale durch das Koppelelement (27) und das Verkleidungsteil (23) hindurch ausgebildet ist,
**dadurch gekennzeichnet, dass**
durch das Koppelelement (27) eine Verbindung zwischen der Membran (5) und dem Verkleidungsteil (23) gebildet ist, welche gegenüber den Verbindungsmitteln (25) eine geringere Haftfestigkeit aufweist, wobei das Koppelelement (27) zerstörungsfrei abnehmbar zwischen der Frontseite (6) der Membran (5) und dem Verkleidungsteil (23) angeordnet ist,
und wobei das Koppelelement (27) ein mit Gel gefüllter Beutel ist.

2. Ultraschallsensoranordnung (22) nach Anspruch 1,
**dadurch gekennzeichnet, dass**
die Verbindungsmittel (25) einen Klebstoff umfassen oder durch den Klebstoff gebildet sind.

3. Ultraschallsensoranordnung (22) nach Anspruch 1 oder 2,
**dadurch gekennzeichnet, dass**
das Koppelelement (27) zwischen der Frontseite (6) der Membran (5) und dem Verkleidungsteil (23) kraftschlüssig unter einem Druck eingeklemmt ist.

4. Ultraschallsensoranordnung (22) nach einem der vorhergehenden Ansprüche,
**dadurch gekennzeichnet, dass**
das Koppelelement (27) ein elastisches Element ist.

5. Kraftfahrzeug mit einer Ultraschallsensoranordnung (22) nach einem der vorhergehenden Ansprüche.

6. Verfahren zum Herstellen einer Ultraschallsensoranordnung (22) für ein Kraftfahrzeug durch Bereitstellen eines Verkleidungsteils (23) sowie eines Ultraschallsensors (2) mit einer Membran (5) zum Aussenden und/oder Empfangen von Ultraschallsignalen, und Bereitstellen einer Halteeinrichtung (21), mittels welcher der Ultraschallsensor (2) an einer Rückseite (24) des Verkleidungsteils (23) befestigt wird, wobei die Halteeinrichtung (21) über Verbindungsmittel (25) an der Rückseite (24) des Verkleidungsteils (23) fixiert wird und der Ultraschallsensor (2) reversibel lösbar mit der Halteeinrichtung (21) verbunden wird, und Bereitstellen eines Koppelelements (27), über welches eine dem Verkleidungsteil (23) zugewandte Frontseite (6) der Membran (5) mit der Rückseite (24) des Verkleidungsteils (23) schwingungstechnisch gekoppelt wird, sodass der Ultraschallsensor (2) die Ultraschallsignale durch das Koppelelement (27) und das Verkleidungsteil (23) hindurch aussendet und/oder empfängt,
**dadurch gekennzeichnet, dass**
durch das Koppelelement (27) eine Verbindung zwischen der Membran (5) und dem Verkleidungsteil (23) gebildet wird, welche gegenüber den Verbindungsmitteln (25) eine geringere Haftfestigkeit aufweist, wobei das Koppelelement (27) zerstörungsfrei abnehmbar zwischen der Frontseite (6) der Membran (5) und dem Verkleidungsteil (23) angeordnet wird,
und wobei das Koppelelement (27) als ein mit Gel gefüllter Beutel ausgebildet wird.

## Claims

1. Ultrasonic sensor arrangement (22) for a motor vehicle, comprising a trim element (23) and an ultrasonic sensor (2), which comprises a membrane (5) for emitting and/or receiving ultrasonic signals, comprising a holding device (21), by means of which the ultrasonic sensor (2) is attached to a rear side (24) of the trim element (23), wherein the holding device (21) is fixed via connection means (25) to the rear side (24) of the trim element (23) and the ultrasonic sensor (2) is reversibly releasably connected to the holding device (21), and comprising a coupling element (27), via which a front face (6) of the membrane (5), which faces the trim element (23), is vibration-coupled with the rear side (24) of the trim element (23) so that the ultrasonic sensor (2) is configured for emitting and/or receiving the ultrasonic signals through the coupling element (27) and the trim element (23),
**characterized in that**
by the coupling element (27) a connection between the membrane (5) and the trim element (23) is formed, which in comparison with the connection means (25) has a lower adhesive strength, wherein the coupling element (27) is non-destructively releasably arranged between the front face (6) of the membrane (5) and the trim element (23),
and wherein the coupling element (27) is a bag filled with gel.

2. Ultrasonic sensor arrangement (22) according to claim 1,
**characterized in that**
the connection means (25) comprise an adhesive or are constituted by the adhesive.

3. Ultrasonic sensor arrangement (22) according to claim 1 or 2,
**characterized in that**
the coupling element (27) is jammed in a force-fitting manner under a pressure between the front face (6) of the membrane (5) and the trim element (23).

4. Ultrasonic sensor arrangement (22) according to any one of the preceding claims,
**characterized in that**
the coupling element (27) is an elastic element.

5. Motor vehicle comprising an ultrasonic sensor arrangement (22) according to any one of the preceding claims.

6. Method for manufacturing an ultrasonic sensor arrangement (22) for a motor vehicle by providing a trim element (23) as well as an ultrasonic sensor (2) comprising a membrane (5) for emitting and/or receiving ultrasonic signals, and providing a holding device (21), by means of which the ultrasonic sensor (2) is attached to a rear side (24) of the trim element (23), wherein the holding device (21) is fixed via connection means (25) to the rear side (24) of the trim element (23) and the ultrasonic sensor (2) is reversibly releasably connected to the holding device (21), and providing a coupling element (27), via which a front face (6) of the membrane (5), which faces the trim element (23), is coupled with the rear side (24) of the trim element (23) in a vibration-coupled manner so that the ultrasonic sensor (2) emits and/or receives the ultrasonic signals through the coupling element (27) and the trim element (23),
**characterized in that**
by the coupling element (27) a connection between the membrane (5) and the trim element (23) is formed, which in comparison with the connection means (25) has a lower adhesive strength, wherein the coupling element (27) is non-destructively releasably arranged between the front face (6) of the membrane (5) and the trim element (23),
and wherein the coupling element (27) is configured as a bag filled with gel.

## Revendications

1. Agencement formant capteur à ultrasons (22) pour un véhicule, avec une partie formant revêtement (23) et un capteur à ultrasons (2), lequel présente une membrane (5), destinée à envoyer et / à recevoir des signaux à ultrasons, avec un dispositif de retenue (21), au moyen duquel le capteur à ultrasons (2) est fixé à une face arrière (24) de la partie formant revêtement (23), le dispositif de retenue (21) étant fixé à la face arrière (24) de la partie formant revêtement (23) par l'intermédiaire de moyens d'assemblage (25) et le capteur à ultrasons (2) est relié au dispositif de retenue (21), de manière amovible réversible et à un élément de couplage (27), par l'intermédiaire duquel une face frontale (6) de la membrane (5), tournée vers la partie formant revêtement (23), est couplée en vibration à la face arrière (24) de la partie formant revêtement (23), de sorte que le capteur à ultrasons (2), destiné à envoyer et / ou à recevoir les signaux à ultrasons est constitué par l'élément de couplage (27) et la partie formant revêtement (23),
**caractérisé en ce**
**qu'**une liaison est formée par le biais de l'élément de couplage (27), entre la membrane (5) et la partie formant revêtement (23), laquelle présente, vis-à-vis des moyens d'assemblage (25), une adhésivité plus faible, l'élément de couplage (27) étant agencé de manière amovible non destructive entre la face frontale (6) de la membrane (5) et la partie formant revêtement (23) et l'élément de couplage (27) étant une poche, remplie de gel.

2. Agencement formant capteur à ultrasons (22) selon la revendication 1,
**caractérisé en ce que**
les moyens d'assemblage (25) comprennent une colle ou sont formés par le biais d'une colle.

3. Agencement formant capteur à ultrasons (22) selon la revendication 1 ou 2,
**caractérisé en ce que**
l'élément de couplage (27) est engagé en force sous l'action d'une pression, entre la face frontale (6) de la membrane (5) et la partie formant revêtement (23).

4. Agencement formant capteur à ultrasons (22) selon l'une des revendications précédentes,
**caractérisé en ce que**
l'élément de couplage (27) est un élément élastique.

5. Véhicule avec un agencement formant capteur à ultrasons (22) selon l'une des revendications précédentes.

6. Procédé de fabrication d'un agencement formant capteur à ultrasons (22) pour un véhicule, par mise à disposition d'une partie formant revêtement (23), ainsi que d'un capteur à ultrasons (2), avec une membrane (5), destiné à envoyer et / ou à recevoir des signaux à ultrasons et mise à disposition d'un dispositif de retenue (21), au moyen duquel le capteur à ultrasons (2) est fixé à une face arrière (24) de la partie formant revêtement (23), le dispositif de retenue (21) étant fixé à la face arrière (24) de la partie formant revêtement (23) par l'intermédiaire de moyens d'assemblage (25) et le capteur à ultrasons (2) est relié au dispositif de retenue (21) de manière amovible réversible et mise à disposition d'un élément de couplage (27), par l'intermédiaire duquel une face frontale (6) de la membrane (5), tournée vers la partie formant revêtement (23), est couplée en vibration à la face arrière (24) de la partie formant revêtement (23), de sorte que le capteur à ultrasons (2) envoie et / ou reçoit les signaux à ultrasons par le biais de l'élément de couplage (27) et de la partie formant revêtement (23),
**caractérisé en ce**
**qu'**un assemblage entre la membrane (5) et la partie formant revêtement (23) est formée par le biais de l'élément de couplage (27), lequel présente, vis-à-vis des moyens d'assemblage (25), une adhésivité plus faible, l'élément de couplage (27) étant agencé de manière amovible non destructive entre la face frontale (6) de la membrane (5) et la partie formant revêtement (23) et l'élément de couplage (27) étant constitué comme une poche, remplie de gel.
